# EUROPEAN PATENT APPLICATION

(11) **EP 1 111 402 A1**
(43) Date of publication of application: **27.06.2001**
(21) Application number: 00123317.0
(22) Date of filing: 26.10.2000
(51) Int. Cl.: G01S 3/00

(54) **Star tracker with CCDs for high radiation environments**

(30) Priority: 20.12.1999 US 467369
(71) Applicant: TRW Inc., Redondo Beach, California 90278 (US)
(72) Inventor: Flannery, John V., Redondo Beach, CA 90277 (US)
(74) Representative: Schmidt, Steffen J., Dipl.-Ing.

(57) **Abstract**

A radiation tolerant stellar reference sensor is utilized in determining the spatial orientation of a spacecraft. The stellar reference sensor includes a plurality of sensor head elements, each having a boresight separated by an angle of separation and having means for detecting a star and generating raw pixel datum corresponding to the locations of each star relative to the spacecraft, where such raw pixel datum is used by a data processor to determine spacecraft attitude.

## Description

### BACKGROUND OF THE INVENTION

### Field of the Invention

The present invention relates generally to a stellar reference sensor for use in collecting data that is used to determine spacecraft attitude and, more specifically to a radiation tolerant stellar reference.

### Description of the Prior Art

The attitude of a spacecraft, particularly a satellite, is required to determine the spatial orientation of the spacecraft for purposes that may include maneuvering the spacecraft for a particular mission. Conventionally, the spacecraft attitude is determined by the relationship between the spacecraft axes, as facilitated by a star sensor mounted onboard the spacecraft, and a reference datum such as a particular celestial star (e.g., Polaris).

Star sensors, also known as "star trackers," usually have a lens system or telescope through which a region of space containing a star is imaged on a detector. The field of view of the star sensor is determined by the dimensions of the detector in the focal plane of the lens system. A system of coordinates may be assigned to the visual field or the surface of the detector, the origin of this system of coordinates preferably being in the center of the visual field. Knowing the sensed positions of the stars relative to the sensor coordinate frame, and correlating this star field geometry with known star fields, the attitude of the sensor and spacecraft may be determined.

Customarily a certain number of fixed stars are selected and compiled into a catalogue of stars, the content of which may be determined by the mission of the spacecraft. The radiation spectrum of the cataloged stars must fall at least partially within the sensitivity range of the detector. For recognition by the star sensor, a cataloged star must have a certain minimum brightness that is generally constant and, in addition, the star must be stationary within the celestial reference frame and so far away that it is imaged as a point on the detector. For a catalogue of stars of this type, a system of coordinates may be selected that is centered in the solar system, for example solar center or earth center. The catalogue of stars will then contain the respective coordinates with respect to the spatial system of coordinates as well as the respective brightness of the star or magnitude of the star. It is possible to select only the brightest stars. However, such selection normally depends on which regions of the celestial sphere are expected to be within the visual field of view of star sensor for a particular mission.

Conventional star sensors have stressing requirements on their detector, optics, and processing electronics with typical accuracy of 5 arc seconds over an 8° (29,000 arc second) field of view. This conventional approach requires large detector arrays (e.g., >250,000 elements), well-corrected optics, and multiple channel electronics, typically tracking 5 or more stars, with 1/20th of a pixel centroiding precision. This precision is barely achievable in moderate radiation environments and is very difficult to achieve in high radiation environments, that is, radiation levels in excess of 1 Mrad of total ionizing dose, without significant advances in detector technology.

Conventional star sensors typically utilize a large charge coupled device (CCD) detector array. The CCD consists of a two-dimensional array with several hundred thousand individual picture elements called pixels. The star field imaged on the detector array develops a distribution of charge on the array that can be read using a readout amplifier that moves the charge, pixel by pixel, down the array to a readout port.

Absent exposure to radiation, the pixel by pixel charge transfer provides a very high charge transfer efficiency (CTE > 0.9999) and an associated low charge transfer inefficiency (CTI < 0.0001). However, after as little as 20 Krad of proton radiation, conventional n-channel CCDs show significant degradation in CTE (< 0.9975) primarily due to displacement damage from non-ionizing radiation. For example, using a 512x512 n-channel CCD having 1024 pixel to pixel transfers, the charge reaching the readout port from a frame transfer showed distortion and was significantly reduced from the star field image (0.9975¹⁰²⁴ = 0.08) initially incident upon the detector array. Large pixel arrays also require a separate storage area that permits a high-speed transfer of data from the imaging area of the detector array to the storage area. Because of the volume of data contained in the storage area, readout of data from the storage area is slower, more susceptible to transfer losses.

Other detector devices have demonstrated superior radiation hardness capabilities over the n-channel CCDs previously mentioned. However, their development is by comparison immature. For instance, charge injection devices (CIDs) used in television cameras in nuclear plants provide discernable imagery even after 10 Mrad dose levels, however, the performance of such devices is not adequate for star sensor applications where light levels from the stars are in the sub-picowatt range. Similarly, p-channel CCDs offer improved tolerance to radiation over conventional n-channel CCDs, but they would not provide adequate star sensor performance in a large area array configuration.

Conventional star sensor lens systems or telescopes contain several high-resolution multi-element optics (lenses) that provide a well-corrected image over a moderate sized field of view, usually 8° to 20°. Many different glass types may be used to form such image correcting lenses, however, most glasses are not effective at radiation levels above 1 Mrad. Even cerium oxide doped glasses, that are designed to be radiation resistant, suffer degradation from electron or proton radiation at these radiation levels. One exceptionally tolerant glass is fused quartz; however, moderate field of view precision optics requires several different glass types to achieve good color correction over the design spectral range. As a result, star sensors employing the use of such optical systems cannot be made suitable for survivability in high radiation environments.

The star sensor electronics amplify the output signal of the detector, convert the signal from analog to digital for processing by an internal microprocessor and digital gate array and, finally, condition the signal for output. Conventional star sensors, having moderate to wide fields of view, need to determine star image positions to a fraction of the pixel dimension (approximately 1/20) to achieve arc second class attitude accuracy. Such accuracy requires sophisticated processing using microprocessors, gate arrays, sizeable memory, and complex software. As a result, the design effort and component costs to achieve high levels of radiation hardness for such complex sensor electronics can be significant.

Some known strategic missile guidance systems employ the use of radiation hardened star sensors that have the ability to operate at radiation levels in excess of 100 Krads. Such systems have overcome the radiation sensitivity of conventional star sensors by utilizing a smaller 90x90 pixel CCD array, and narrower field of view optics. However, since the visual field of the star sensor is determined by the detector size in the focal plane of the optical lens system, the visual field of such sensors is reduced. The reduction in the visual field of the single star sensor is overcome by mounting the star sensor on a complex gimbal assembly that allows the star sensor to rotate and point at particular stars.

Based on techniques known in the art for spacecraft star sensors, a stellar reference sensor that includes a radiation tolerant design suitable for spacecraft applications having small detector arrays, small field of view optics, and simplified processing electronics is highly desirable.

### SUMMARY OF THE INVENTION

The preceding and other shortcomings of the prior art are addressed and overcome by the present invention that provides a radiation tolerant stellar reference sensor. The stellar reference sensor includes a plurality of sensor head elements, each having a boresight separated by an angle of separation from each other sensor head element boresight and having means for detecting a star and generating raw pixel datum corresponding to the locations of each star relative to the spacecraft, where such raw pixel datum is used by a data processor in determining spacecraft attitude.

### BRIEF DESCRIPTION OF THE DRAWINGS

Reference is now made to the following description and attached drawings, wherein:
FIG. 1 illustrates an attitude control system for use in high radiation environments in accordance with the present invention;
FIG. 2a illustrates a top view of a stellar reference sensor assembly in accordance with the present invention;
FIG. 2b illustrates a side perspective view of the stellar reference sensor assembly of FIG. 1;
FIG. 3 illustrates a block diagram view of an optical assembly of the present invention; and
FIG. 4, illustrates a schematic diagram of an electronics unit of the present invention.

### DETAILED DESCRIPTION OF THE INVENTION

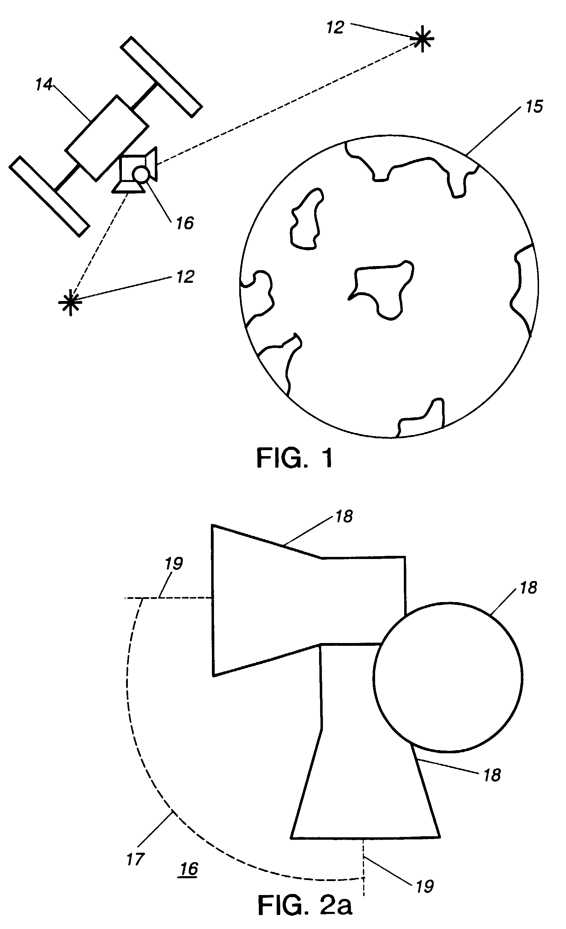

Referring to FIG. 1, a spacecraft 14, such as a satellite orbiting about a planet 15, and a radiation tolerant stellar reference sensor assembly 16 capable of operating successfully in environments having radiation levels in excess of approximately 1 Mrad silicon is illustrated. The data collected by the sensor assembly 16 is utilized in determining the orientation in space, or attitude, of the orbiting spacecraft 14 where the relative relationship between the spacecraft stellar reference sensor assembly 16, located onboard the spacecraft 14, and a plurality of stars 12 is determined.

Referring to FIG. 2, the stellar reference sensor assembly 16 includes three sensor head subassembly elements 18, each sensor head element 18 fixedly separated from each other sensor head element 18. In particular, a boresight 19 of each sensor head element 18 is separated from each other sensor head boresight 19 by a relatively large angle of separation 17 of from approximately 45° to 90°. Each sensor head element 18 independently samples a small region of space contained within its field of view (FOV) to locate a star for determining the spacecraft attitude. Utilizing known star cataloging techniques, each sensor head element 18 is able to identify a particular star by its brightness. As a result, the present invention does not require each sensor head element 18 to track any particular star or multiple stars, and only requires a high probability that one star exists within the sensor head's field of view.

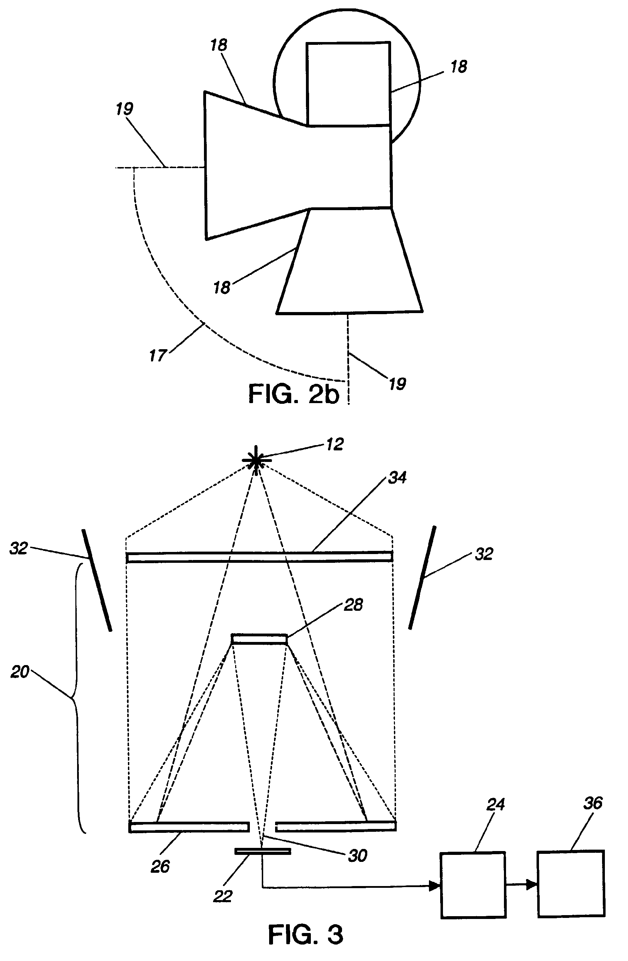

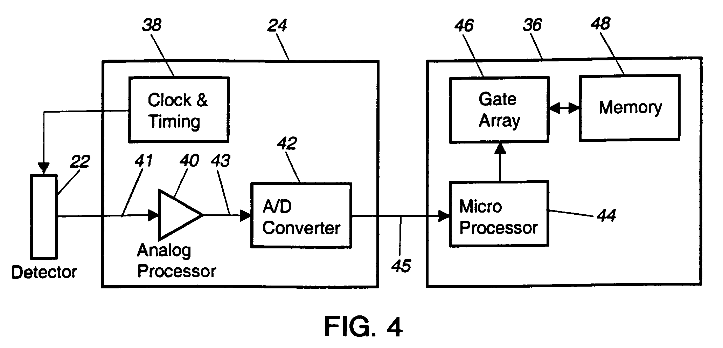

Referring to FIG. 3, each sensor head element 18 includes an optical assembly 20, an arrayed detector 22, and an electronics unit 24. The optics 20 generate an image of the star 12 onto the detector array 22 utilizing a modest field of view and low-resolution mirrored optical telescope system 20. The electronics 24 (see FIG. 4) are simplified over the electronics of conventional star sensors because the electronics 24 only process signals from each pixel of a smaller, detector array 22. Such simplification of the electronics 24 allows the electronics 24 to function with less sensitivity to radiation exposure.

By lowering the telescope requirements to a modest field of view (< 3°) and a low-resolution requirement of from approximately 8100 pixels to 10,000 pixels, radiation sensitive glasses typically needed to provide well corrected images over a wide spectral range are alleviated, and the sensor head optics 20 can be greatly simplified to allow radiation hardening to 10 Mrad levels. The preferred sensor head optics 20 is a reflective cassegrain telescope. The telescope 20 includes a concave primary mirror 26 having a central hole 30, and a second concave mirror 28. Light from the star 12 enters the telescope system 20 and is incident upon the primary mirror 26 where it reflects and converges to the secondary mirror 28 spaced from the primary mirror. The starlight convergent upon the secondary mirror 28 is further converged through the central opening 30 of the primary mirror 26 to the sensor head detector 22. Although the preferred embodiment utilizes a reflective cassegrain telescope, any reflective (multi-element) telescope may be utilized in the present invention or, alternatively, refractive and transmissive (catadioptric) telescopes having radiation tolerant fused silica transmissive elements may be considered.

Further, to maintain good three axis accuracy by detecting a star in each sensor head element 18, the small field of view optics 20 of each sensor head 18 may be sized to provide a high probability of observing at least one detectable star in the field of view of each telescope. To provide improved imagery over each sensor head's 18 field of view, a radiation hardened corrective glass 34 (e.g., Schmidt corrector) can be mounted at the center of curvature of the primary mirror 26. The corrective glass 34 may be fabricated from a fused quartz material or similar material having radiation hardened characteristics. A sunshade 32 may also be utilized to keep sunlight from flooding the optics 20 and causing undesired stray light on the detector 22.

Each sensor head element 18 of the present invention includes a small full frame imager CCD detector array 22. The star field image incident on the detector array 22 develops a distribution of charge on the array 22 that can be read using a readout amplifier (not shown) that moves the charge, pixel by pixel, down the array 22 to a readout port (not shown) of the electronics 24. Small detector arrays, for example 90x90 element array detectors, are preferred for high radiation applications because they are less affected by charge transfer inefficiency (CTI) losses during high radiation exposure and can be utilized to increase the data transfer efficiency of the star sensor. For example, at 0.998 charge transfer efficiency, the output signal is in excess of 80% of its pre-radiated output level.

Referring to FIG. 4, each stellar reference sensor head 18 also includes an electronics unit 24. By processing only one star per sensor head element 18 - e.g., by processing only the brightest star in the field of view, compared to the conventional five to six stars for a single moderate field of view star sensor, and by reducing the number of pixels required in the detector 22, it is possible to simplify the sensor head electronics 24. Instead of utilizing a conventional internal microprocessor, each sensor head element 18 may include only the electronics required to transfer raw pixel image data from the detector array 22 to a data processor 36 (avionics subsystem computer) that is external to the sensor 16 and has its own radiation hardened microprocessor 44. However, the present invention does not preclude maintaining the data processor 36 internal to the sensor assembly 16.

The electronics 24 includes a clock timing element 38, an analog processor 40, and an analog to digital (A/D) converter 42. As light comes into the detector from a star, the light develops a microvolt level charge 41 at each pixel of the detector array 22 that is sent to a detector readout port (not shown). The clock and timing element 38 sequences the detector 22 so that each charge 41 is transferred pixel by pixel to the readout port (not shown). Each pixel charge 41 is applied to the analog processor 40, which amplifies the charge to a volt level charge 43. The volt level charge (signal) 43 at the output of the analog processor is applied to the A/D converter, and the A/D converter converts the signal 43 to an approximately 10 to 14 bit resolution raw pixel data digital signal 45. The raw pixel data digital signal 45 output at the A/D converter is applied to the processor 36, typically an avionics subsystem computer, located onboard the spacecraft 14. The processor 36 may include a radiation hardened microprocessor 44 that, in conjunction with a gate array 46 and a memory element 48, determines the location of the star image relative to each sensor's 18 boresight 19, and correlates the three star fields with known star fields (star catalog) which are stored in memory element 18.

In accordance with the advantages of the present invention, the stellar reference sensor 16, by including a multiple element design that distributes the star tracking requirements of the sensor among multiple sensor head elements 18, achieves a more radiation tolerant stellar reference sensor design. Each sensor head element, instead of requiring larger, more complex and less radiation tolerant components, may utilize a smaller detector array, smaller field of view, more radiation tolerant optics and simplified electronics. Moreover, any requirement to develop new component technology suitable for high radiation applications is alleviated by using commercially available state-of-the-art and radiation tolerant components that include smaller detector arrays, smaller field of view and lower resolution optics, and simplified electronics. Specifically, by only needing to readout one star from a small detector array 22, readout times of the data from the array 22 can occur relatively fast compared to the exposure time, thus allowing the use the full frame imager CCD array that is less susceptible to transfers losses during radiation exposure. Likewise, the need for a radiation hardened internal microprocessor may be eliminated by utilizing simplified electronics 24 that are more easily radiation hardened, needing only to process one star image per detector 22, and transferring a relatively small array of raw digital data 45 to an external attitude control system computer 36.

The present invention may also provide the advantages of increased three-axis pitch, yaw, and roll accuracy and sensor redundancy. The present invention, by creating large angle separations (e.g., > 45°) between each sensor head element 18, could provide comparable accuracy for all three axes, whereas a single moderate field of view sensor provides good accuracy for two axes but poorer accuracy about its boresight axis.

System redundancy is also an advantage in the present invention, since data from only two out of three sensors is required for spacecraft attitude determination. Each sensor head element 18 operates independently of the other sensor head elements 18 by having its own detector 22, optics 20 and processing electronics 24. Redundant sensor capabilities can be utilized either where a sensor head malfunctions or a sensor head is " blinded" by the radiation of the sun where such blinding occurs when the sun is within the field of view (FOV) of the sensor head element and its light is shining down the sensor head boresight.

Obviously, many modifications and variations of the present invention are possible in light of the above teachings. Thus, it is to be understood that, within the scope of the appended claims, the invention may be practiced otherwise than as specifically described above.

## Claims

1. An radiation tolerant stellar reference sensor assembly comprising:
a plurality of sensor head elements, each having a boresight separated from each other said sensor head element boresight by an angle of separation;
means within each said sensor head element for detecting a star and generating raw pixel image datum corresponding to locations of said star relative to a spacecraft; and
means for transferring said raw pixel image datum to a data processor.

2. A radiation tolerant stellar reference sensor as recited in claim **1**, wherein said angle of separation is an angle of from approximately 45 degrees to 90 degrees.

3. A radiation tolerant stellar reference sensor as recited in claim **1**, wherein each said sensor head element comprises:
a detector having a plurality of distinct pixel elements, wherein said detector develops an electric charge at each said pixel element, said electric charge corresponding to a region of an image of said star;
an optical assembly for focusing said star image onto said detector; and
an electronics unit for transforming each said pixel based electrical charge into said raw pixel data for output to said data processor.

4. A radiation tolerant stellar reference sensor as recited in claim **3**, wherein said detector is a full frame imager detector array.

5. A radiation tolerant stellar reference sensor as recited in claim **3**, wherein said optical assembly is a catadioptric telescope.

6. A radiation tolerant stellar reference sensor as recited in claim **3**, wherein said electronics unit comprises:
a clock timing element electrically connected to said detector and sequencing said detector such that each pixel based electrical charge is transferred to a readout port of said detector;
an analog processor for amplifying said pixel based electrical charge to a pixel based volt level electrical charge; and
an analog to digital converter for converting said pixel based electrical charge to a digital pixel based electrical charge, said converter electrically connected to said data processor and supplying said raw digital pixel based electrical charge as said raw pixel data.

7. A radiation tolerant stellar reference sensor as recited in claim **1**, wherein said data processor comprises:
a radiation hardened microprocessor for determining a centroid of measurement of each said star image.
